# EUROPEAN PATENT SPECIFICATION

(11) **EP 3 188 036 B1**
(45) Date of publication and mention of the grant of the patent: **08.05.2019**
(21) Application number: 15203167.0
(22) Date of filing: 30.12.2015
(51) Int. Cl.: G06F 16/93, G06F 17/24, G06F 21/62, G06Q 50/18

(54) **A METHOD AND A SYSTEM FOR PROVIDING AN EXTRACT DOCUMENT**
VERFAHREN UND SYSTEM ZUR BEREITSTELLUNG EINES EXTRAKTDOKUMENTS
PROCÉDÉ ET SYSTÈME PERMETTANT DE FOURNIR UN EXTRAIT D'UN DOCUMENT

(43) Date of publication of application: 05.07.2017
(73) Proprietor: LegalXtract ApS, 7100 Vejle (DK)
(72) Inventor: LAURSEN, René Richard, 7100 Vejle (DK)
(74) Representative: Patentgruppen A/S

(56) References cited:
- US-A1- 2005 004 922
- US-A1- 2007 176 000
- US-A1- 2009 043 794
- US-A1- 2009 089 663

## Description

### Field of the invention

The invention relates to a method for providing an extract document from a source document.

Further, the invention relates to a system for providing an extract document from a source document by use of such a method.

### Background of the invention

In Denmark, the Danish Public Information Act, which applies to most public agencies, public administrative offices, etc. and which furthermore extends to certain private and public energy suppliers, etc., gives third parties such as journalists a right to upon request to gain access to certain documents, files, etc., In other countries similar or corresponding rules apply, such as acts referred to as e.g. "Access to Public Information Act", "Freedom of Information Act", etc., which ensures that the public, e.g. a member of the public, a journalist, etc. may have access to files, documents in such files, etc.

However, in connection with such an access to files, documents, etc., in e.g. public administration, which a third party may have been granted, it is required that the respective documents are carefully examined for information, such as for example names of certain persons, classified information, confidential information, etc. that must be kept from being given to the public in connection with the respective documents.

Currently, this is done in Denmark by a relative time and resource demanding manual process, whereby the relevant document is printed on paper, a legally qualified person marks the words or other information, that must be withheld from being made publicly available, on the document. The document with the markings is then presented to a supervising legally qualified person for approval. In case of approval, the paper document with the marked words or other information marked is forwarded to a legally qualified person, who manually strikes out the marked words with a black marker pen. The document is subsequently scanned into a pdf-format document, which is printed out. Hereafter, this resulting "extract" document is examined in order to detect if any of the marked words or marked information are still recognizable and/or readable, e.g. whether some of the letters being visible through the black marking. If this is the case, the striking out with the black marker pen and the subsequent scanning, printing and examining is repeated until a satisfactory result is achieved.

It is noted that in Danish administrative organizations, etc., it is currently not allowed to use available computer programs such as word processing programs during such an extracting process, since e.g. such programs will generate automatically stored local temporary files, which will put doubt on the security of using such programs. In this connection it is noted that it is a requirement that when a resulting extract document is forwarded to the third party who has requested access, this third party will not be able to gain any information regarding the words or other information that has been striken out in the extract document, no matter whether the third party receives the extract document as a paper document or as an electronic document.

As it will be clear from the above, the work and time involved in producing such extract documents for public access is considerable. To this can be added that as a consequence of the amendments introduced in the most recent version of the Danish Public Information Act in force from 1 January 2014, which has enhanced the number of allowed requests for public access, the resources necessary for handling these has been increased even more.

It is noted that currently computer programs and computer assisted methods are known in the prior art for use in connection with performing redaction and/or sanitization of documents containing e.g. sensitive information. Seemingly, the term of performing redaction is frequently used in connection with removal of sensitive information in a document, e.g. by blacking-out or obscuring, and the term of performing sanitization is frequently as a generalization of redaction, wherein sensitive terms may be replaced by less sensitive terms instead of blacking-out or obscuring the sensitive terms, whereby useful information is still conveyed to the reader. It is noted, though, that the terms "redaction" and "sanitization" seem to be used in varying aspects and meanings within this particular field. However, as mentioned above, such current computer programs and computer assisted methods may put doubt on the security, since e.g. such programs may generate automatically stored local temporary files, etc., which may provide a risk that a third party may possibly gain information regarding the removed sensitive terms.

US 2005/0004922 A1 discloses an example of a computer program for sanitization, which in this US document is defined as removing sensitive information from a document. The computer program comprises a scan function and databases for identifying sensitive information such as names and addresses in a digital source document. The sensitive information is displayed for a user with a list of proposed general-case terms for substitution. The user reviews the proposed substitutions and the reviewed list is saved for use in finalizing the substitution document (and any future documents). The sensitive terms can no longer be seen on a screen displaying the substitution document e.g. in a word processor program after the finalizing of the substitution with the saved list linking the sensitive and general-case terms.

Thus, there is a need for improvements to currently used methods in order to reduce the time and effort used in providing such documents to be forwarded to persons having requested and been granted public access, which documents will be referred to as extract documents, i.e. documents where information of confidential character or information that for other reasons should be "hidden" are blacked out.

Furthermore, there is a need for providing such an improved process, which can be performed using a higher degree of automatizing, e.g. by use of computer assisted processes.

Even further, there is a need for such an improved process, by means of which a higher degree of security can be achieved. Also, it is an object to achieve e.g. a higher degree of acceptability of the extract documents in the first version produced, whereby the time and effort involved can be reduced while still maintaining the required quality level, e.g. level of security.

Furthermore, there is a need for such an improved process, whereby a flexible method can be provided as regards e.g. office work, work routines, etc.

These and other objects are achievable by the invention as explained in further detail in the following.

### Summary of the invention

The invention relates to a method of providing an extract document from a source document, said source document being a classified document, said method comprising the steps of
a) providing said source document in a computer readable format,
b) selecting at least one item from said source document,
c) establishing an identifying data set to identify said at least one item that has been selected,
d) validating said at least one item that has been selected,
e) providing the extract document in a fixed format by performing an irreversible conversion of said source document, based on said source document and said identifying data set for said at least one item that has been validated, and
wherein the identifying data set by means of which said at least one item that has been selected and/or validated is identified, is stored together with a source document identification.

Hereby, it is achieved that an extract document can be provided by means of a computer-assisted method and whereby the source document remains unamended, i.e. due to the selected items being identified by an identifying data set, which is separate from the source document as such. Further, by providing the extract document via an irreversible conversion, it will not be possible from the resulting extract document to retrieve any information regarding the selected and validated items.

Further, an efficient method is achieved, whereby the source document remains unamended, i.e. due to the selected items being identified by an identifying data set, which is separate from the source document as such, and whereby furthermore it is facilitated that the work can be interrupted and resumed later, e.g. by reloading the source document and the separately stored identifying data set for the items already selected.

By the term "classified document" will for the purpose of this application be understood a document that has not been published prior (and thus is already available to anyone) and that may potentially comprise sensitive information, where the character of such sensitive information may be widespread and may include e.g. privacy information, information that is required to be kept secret, information relating to business secrecy, etc.

By the term "fixed format" will for the purpose of this application be understood a digital document which has a fixed image or layout. The document cannot be edited to reveal any previous or historic information before the conversion into a fixed format document. A document in a fixed format can only be amended by adding new information to the original layout or image of the document as converted.

Examples of fixed format documents and computer programs for presenting "fixed format" documents are Portable Document Format (PDF) from Adobe Systems and Open XML Paper Specification (OpenXPS) from Microsoft Corporation.

The identifying data set or sets to identify one or more of said at least one item that has been selected may be established in various manners or forms, e.g. an item may be identified by page number in the source document and coordinates on the page, etc. The name of the source document may also be part of the identifying data set or sets e.g. together with the size of the source document to further ensure a safe identification of the correct source document by comparison of size.

In an embodiment of the invention, steps b) and c) are repeated for said source document, before step d) is performed for the source document in its entirety.

Hereby, an efficient method is achieved.

In an embodiment of the invention, the step d) of validating said at least one item that has been selected comprises acknowledging the at least one selected item or rejecting the at least one item that has been selected.

Hereby, it is achieved that a possibility of performing corrections, if any, of the selected items is provided in a user-friendly and resource-efficient manner.

In an embodiment of the invention, step b) and step c) are repeated subsequent to step d) and prior to step e).

Hereby, a flexible and user-friendly method is provided.

In an embodiment of the invention, the step e) of providing the extract document by performing an irreversible conversion of said source document, based on said source document and said identifying data set for said at least one item that has been validated comprises masking in the extract document said at least one item that has been validated.

Hereby, it is achieved that the extract document corresponds to the source document as regards e.g. the format, set-up, etc. and that it is immediately recognizable where items have been made unintelligible for the third party.

In an embodiment of the invention, the irreversible conversion according to step e) comprises conversion of the source document being in an intermediate extract version with the at least one item that has been validated masked off into an image document, possibly followed by a conversion into a portable document format.

Hereby, it is achieved that information about the selected and validated items can not be retrieved from the resulting extract document.

The term "image document" will for the purpose of this application be understood as a digital document defined by graphical values for displaying an image on a computer screen and for a printed copy. A graphical value of an image only reveals the necessary graphical and position information such as a colour for a specific pixel on the computer screen (and on a printed copy) in order to display this part of the image document. Graphical values of an image document comprise no information or code which may assist in detecting an origin of the image document such as the above-mentioned selected and validated items.

In an embodiment of the invention, the source document is provided as a text document.

Hereby, it is achieved that items such as words, names, abbreviations, acronyms, numbers, etc. can be searched using e.g. OCR recognition.

The text document may comprise different items which can be subject for extraction with the present invention such as text and/or graphical items. The text items may include words; names of persons, places and/or things; abbreviations, acronyms, numbers, etc. which can be searched using e.g. OCR recognition. The graphical items may include photographs, drawings or other visual images; symbols; graphical representations; text items which has not been OCR scanned, etc.

The digital format of a text document as defined above may be any format generally used in working with documents using computer means e.g. formats of word processor programs such as Microsoft Word (.doc files), formats of fixed format programs such as Adobe Acrobat (.pdf files), formats of drawing programs such as Autodesk Autocad (.dwg files), formats of Internet related documents (.xml files or the like), etc. which can be subject for extraction with the present invention.

The source document in a format of a text document may be loaded into the computer apparatus from e.g. an electronic archive or the document may be scanned and loaded into the computer apparatus. Other manners of providing and loading the source document may be used as well.

In an embodiment of the invention, the at least one item that has been selected from said source document may be one of
- a word,
- a plurality of words in sequence,
- a paragraph,
- a box and
- combinations of the above.

In an embodiment of the invention, the box may comprise a picture, an image, a drawing, a diagram and/or a word.

In an embodiment of the invention, the step b) of selecting at least one item from said source document is facilitated by one of
- using a focusing functionality using e.g. OCR recognition,
- marking a plurality of words, a paragraph and/or a document area.

Hereby, a flexible and user-friendly method is provided, which furthermore facilitates a cost and time efficient system for providing extract documents.

In a second aspect of the invention, a system is provided for providing an extract document from a source document using a method according to any one of claims 1
- 10, said system comprising a computer apparatus, display means and input means, said system being configured for
- displaying said source document on said display means,
- facilitating at least one item from said source document to be selected in a manner without amending the source document,
- establishing an identifying data set to identify said at least one item that has been selected,
- facilitating a validation process of said at least one item that has been selected,
- and providing the extract document in a fixed format upon a completed validation process by performing an irreversible conversion of said source document, based on said source document and said identifying data set for said at least one item that has been validated,
wherein the system further is configured for storing said identifying data set by means of which said at least one item that has been selected and/or validated is identified, together with a source document identification.

Hereby, it is achieved that an extract document can be provided by means of a computer apparatus and whereby the source document remains unamended, i.e. due to the selected items being identified by an identifying data set, which is separate from the source document as such. Further, by providing the extract document via an irreversible conversion, it will not be possible from the resulting extract document to retrieve any information regarding the selected and validated items.

Further, an efficient and user-friendly system is achieved, whereby the source document remains unamended, i.e. due to the selected items being identified by an identifying data set, which is separate from the source document as such, and whereby furthermore it is facilitated that the work can be interrupted and resumed later, e.g. by reloading the source document and the separately stored identifying data set for the items already selected.

It will be understood by the skilled person that the computer apparatus comprises processor means, e.g. processor means for facilitating displaying of the source document and other documents on the display mean, for executing computer program operational steps, e.g. steps of an application program according to an embodiment of the invention, for operating the computer apparatus in accordance with input from input means such as computer mouse, keyboard, etc. Also, it will be understood that the computer apparatus comprises storage means, e.g. storage means for use as exemplified in the following detailed description. Also, the computer apparatus may comprise and/or be connected to other normally used devices and/or elements such as computer readable medium readers. It is also noted that the computer apparatus may be part of a computer network, e.g. a local (LAN) or wide area network (WAN) or possibly via the Internet. When the computer apparatus is part of a network, the application program may e.g. be executed at least partly on a remote computer or the computer apparatus may be a stand-alone computer. It will also be apparent to a person skilled within the art that the computer apparatus and the computer network, in case the computer apparatus is part of such a computer network, will be provided with state of the art protective measures such as firewall, anti-hacking computer software, etc.

In an embodiment of the invention, the system may be configured for facilitating selection of at least one item from said source document by one of
- using a focusing functionality using e.g. OCR recognition, and
- marking a plurality of words, a paragraph and/or a document area.

Hereby, a flexible and user-friendly system is provided, which furthermore facilitates a cost and time efficient method of providing extract documents.

In an embodiment of the invention, the system may be configured for performing said irreversible conversion by a conversion of the source document being in an intermediate extract version with the at least one item that has been validated masked off into an image document, possibly followed by a conversion into a portable document format.

Hereby, it is achieved that information about the selected and validated items can not be retrieved from the resulting extract document.

In a third aspect of the invention, a computer program product is provided, said computer program product comprising computer readable instructions for carrying out all of the steps of any one of the method claims 1-10, when the computer program product is executed on a suitable computer system.

In the above, the method and the system has been described for use in connection with Public Information Acts or the like, where the extract documents are provided in response to granted requests for access to e.g. public administrative documents, files, etc. However, the invention may be used in other fields and applications as well.

### The figures

The invention will be explained in further detail below with reference to the figures of which
- Fig. 1: shows an example of a workflow according to an embodiment of the invention,
- Fig. 2: shows a further example of a workflow according to an embodiment of the invention,
- Fig. 3: illustrates an example of a graphical user interface for an extract application program according to an embodiment of the invention, and
- Fig. 4: illustrates further exemplary embodiments according to the invention.

### Detailed description

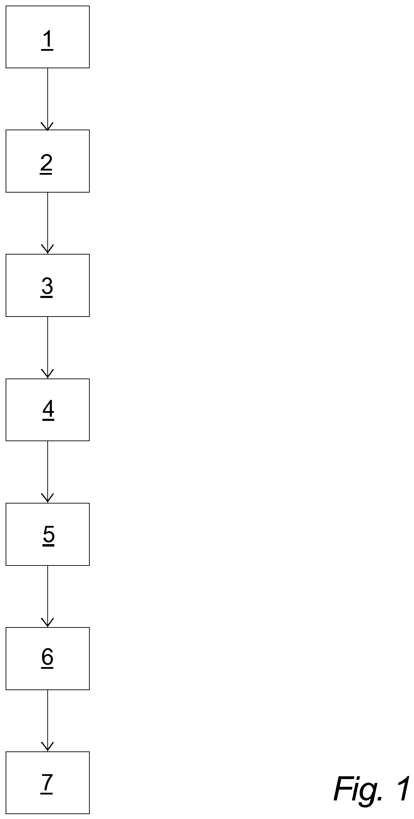

In fig. 1 an example of a workflow according to an embodiment of the invention is shown. According to this example of a workflow. an extract application program is activated and from this application program a source document is loaded (at 1) into a suitable computer apparatus or computer device, e.g. a laptop computer, a stationary computer, etc., and displayed to the user on a corresponding display means. The source document may be a document that is to be forwarded to a person, who has requested access to a file, wherein the source document is contained. The source document, which may be in a text format, may be loaded into the computer apparatus from e.g. an electronic archive or the document may be scanned and loaded into the computer apparatus. Other manners of providing and loading the source document may be used as well.

When the source document has been loaded and displayed on the display means, the user can search (at 2) the document for certain words, names, abbreviations, acronyms, numbers, etc., e.g. by using an OCR method for detecting certain words. The search can be initiated using input means such as keyboard, computer mouse, or other computer input means. Furthermore, one or more of the OCR recognized words can be focused by navigating to the word using keyboard or computer mouse. When an OCR recognized word is focused by the application program, the word will be marked using e.g. a first marking colour, enhancement or the like to indicate that the word is an OCR recognized word.

The focused words can subsequently (at 3) be reviewed and selected, which is indicated by a marking using e.g. a second marking colour, enhancement or the like that is different from the first marking to indicate that the user has selected the one or more words.

Furthermore, when two or more OCR recognized words, which are placed next to each other are selected, the words as well as the space between the words are marked as an unbroken marking.

Further, other manners of selecting items from the source document are provided for as indicated at 4. For example, in a paragraph mode a plurality of OCR recognized words can be selected by e.g. the computer mouse, by means of which a box can be defined, covering the plurality of words in e.g. a paragraph. According to another example, other items than OCR recognized words can be selected in a box mode, whereby a box can be defined by e.g. the computer mouse, which box can cover such items as images, drawings, diagrams, words that have not been OCR recognized, etc.

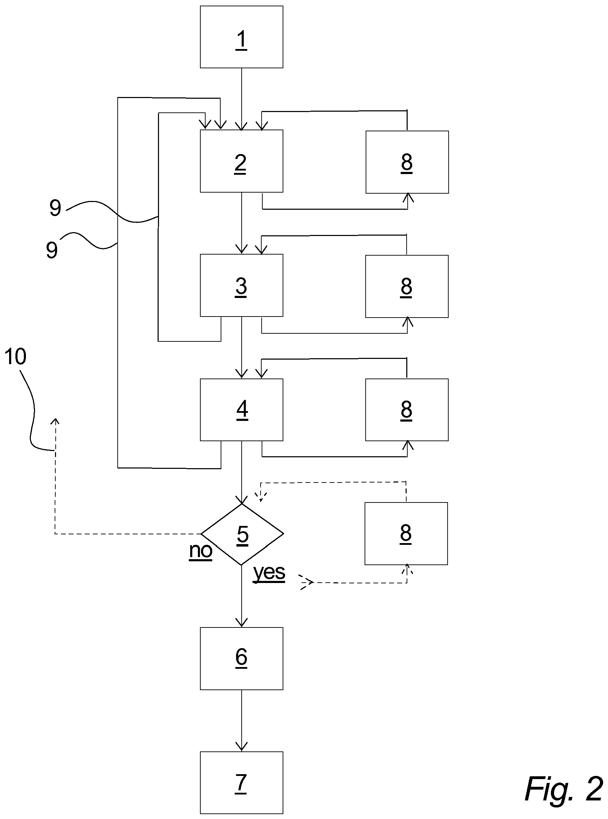

As it will be explained in further detail below in connection with fig. 2, the markings of the selected items in the document can be saved using a save functionality. The source document remains unamended, but data for identifying the marked items are saved in an intermediate or temporary file together with an identification of the source document. When the work is resumed, the respective source document is reloaded together with the intermediate or temporary file containing the data for identifying the marked items.

Returning to fig. 1, the application program provides at 5 a validating function, where e.g. a supervisor or the like can review the selected - and thus marked - items in the document.

On completion of the validation at 5, the resulting extract document can be generated at 6 in that the selected and validated items are masked, e.g. completely covered, replaced or the like with black colour, e.g. by a black box, to fully prevent anything of the items to be recognizable and an irreversible conversion is made, e.g. into an image document to prevent any information about the selected, validated and masked items to be retrievable from the resulting extract document.

Subsequent to this, the resulting extract document in image format may at 7 be converted into a portable document format (pdf) to facilitate the handling and forwarding of the resulting extract document to the person or third party that has requested the access to the document.

In fig. 2 is shown a workflow essentially as discussed in connection with fig. 1, but furthermore it is exemplified here that in connection with the searching 2, reviewing and selecting 3, 4 it is possible for the user freely to jump between the various steps as indicated by the return loops 9.

Also, it is shown in fig. 2 that in connection with the validating function 5, where e.g. a supervisor or the like can review the selected - and thus marked - items in the document, it is possible for the supervisor to either approve ("yes") or disapprove ("no") the selected items in the document, In the latter case the person having made the work can amend or correct, i.e. as indicated by the punctuated return loop 10 that allows the user to return to a prior step.

Further, a save functionality 8 is shown, whereby it is possible in connection with each step to save the work already performed, e.g. the markings of the selected items in the document can be saved using this save functionality. By this save functionality the source document remains unamended, but e.g. data for identifying the marked items are saved in an intermediate or temporary file together with an identification of the source document. When the work is resumed, the respective source document is reloaded together with the intermediate or temporary file containing the data for identifying the marked items. The work can be resumed at the same step as where it was saved, but in essence it may be resumed at any of the steps 2, 3 and 4.

As indicated, it can also be possible for the supervisor in connection with the validating function 5 to use the save functionality 8 as indicated by punctuated lines.

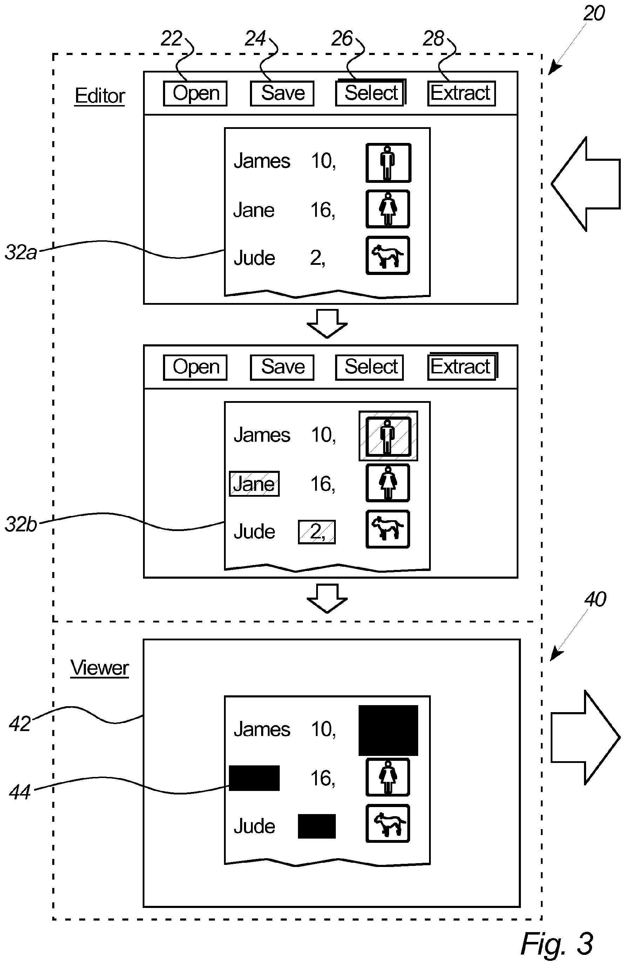

Fig. 3 illustrates an example of a graphical user interface for an extract application program according to an embodiment of the invention, where an editor 20 and a viewer 40 are shown.

The editor comprises for example a key 22 for opening a source document, e.g. for finding and loading the document, a key 24 for saving the work performed, e.g. by saving the data relating to the work in an intermediate or temporary file together with an identification only of the source document, a key 26 for selecting an item in the source document and a key 28 for performing an extraction on the document.

The user will initiate the work in the editor 20 by finding, loading and opening the respective source document, which in fig. 3 is shown as a relative simple example 32a. The user may subsequently proceed by searching for items such as words, selecting one or more of these and/or selecting other items by marking these with boxes as indicated by the source document in the selected version 32b.

Subsequent to a validation having been performed and by operating the extract key 28, the extract document 42 will be shown in the viewer 40 with the respective selected and validated items blackened out with black boxes 44.

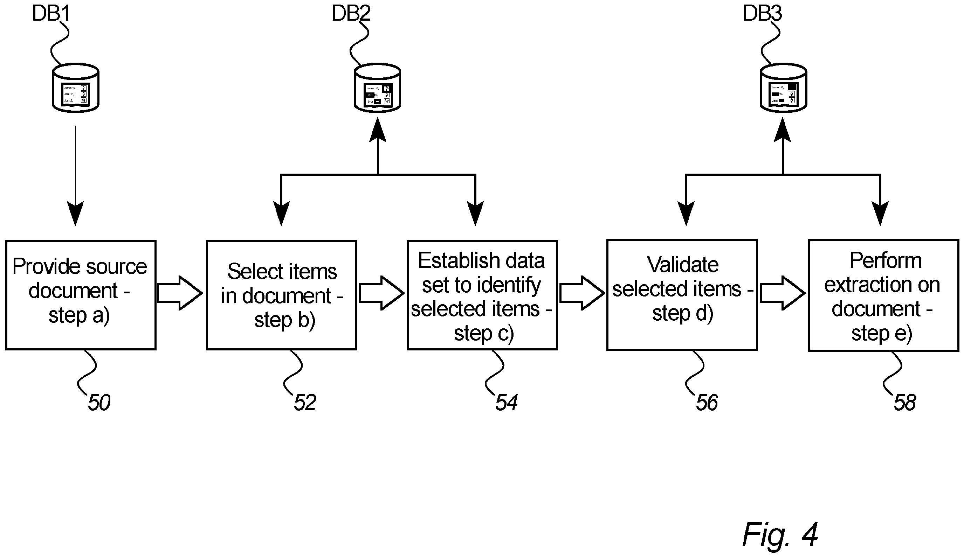

Fig. 4 illustrates further exemplary embodiments of the method and the system according to the invention. Here, it is shown that in connection with step a) of providing a source document in a computer readable format, e.g. a pdf-format, the source document is e.g. searched and loaded 50 from a source such as a database DB1.

Subsequent to this, the work related with the searching and selecting 52 of items in the source document and step c) of establishing an identifying data set to identify the one or more items that has/have been selected 54 involves a database DB2, e.g. a database in connection with the extract application program, in which database DB2 identifying data set by means of which said the one or more items that has/have been selected, is stored together with a source document identification. The identifying data set may be established in various manners or forms, e.g. an item may be identified by a page number in the source document and coordinates on the page, etc. The name of the source document may also be part of the identifying data set or sets e.g. together with the size of the source document to further ensure a safe identification of the correct source document by comparison of size.

Thus, the source document remains unamended, i.e. due to the selected items being identified by an identifying data set, which is separate from the source document as provided from and stored in the database DB1. Further, in this way it is made possible that the work can be interrupted and resumed later, e.g. by reloading the source document from DB1 and the separately stored identifying data set for the items already selected from DB2.

Finally, it is shown in fig. 4 that the step d) of validating the selected items at 56 and the step e) of performing the extraction on the document at 58 is made in interaction with a further database DB3, e.g. a database related to the extract application program, wherein the extract document is stored.

The extract document may be automatically renamed when it is stored in a database, e.g. DB3. The renaming may be performed e.g. by adding a letter to the name of the source document such as "X-name.pdf" or by changing the name of the source document entirely for example with a file name generator. A person performing the extraction of the source document may also manually rename the extract document when storing it in a database.

The databases DB2 and DB3 may be located on separate data storage devices in the same place or in different places with data links between the devices or may be located on one data storage device in different storage areas of the device.

In the above description, various embodiments of the invention have been described with reference to the drawings, but it is apparent for a person skilled within the art that the invention can be carried out in an infinite number of ways, using e.g. the examples disclosed in the description in various combinations, and within a wide range of variations within the scope of the appended claims.

### List of reference numbers

- 1: Source document is loaded
- 2: Searching and focusing
- 3: Reviewing and selecting
- 4: Other manners of selecting
- 5: Validating
- 6: Generating extract document by irreversible conversion
- 7: Converting into a portable document format
- 8: Save functionality
- 9: Return loop
- 10: Return loop from validation step
- 20: Editor at extract application program
- 22: Key for opening a source document
- 24: Key for saving the work performed
- 26: Key for selecting an item
- 28: Key for performing an extraction on the document
- 32a: Source document
- 32b: Source document in selected version
- 40: Viewer at extract application program
- 42: Extract document shown in viewer
- 44: Selected and validated items masked/replaced with black boxes
- 50: Providing source document - step a)
- 52: Selecting items in document - step b)
- 54: Establishing data set to identify selected items - step c)
- 56: Validating selected items - step d)
- 58: Performing extraction on document - step e)

## Claims

1. A method of providing an extract document from a source document, said source document being a classified document, said method comprising the steps of
a) providing (50) said source document (32a) in a computer readable format,
b) selecting (3; 52) at least one item from said source document (32a),
c) establishing (54) an identifying data set to identify said at least one item that has been selected,
d) validating (5; 56) said at least one item that has been selected,
**characterized in that** the method comprises
e) providing (6; 58) the extract document (42) in a fixed format by performing an irreversible conversion of said source document, based on said source document (32a) and said identifying data set for said at least one item that has been validated, and
wherein said identifying data set by means of which said at least one item that has been selected and/or validated is identified, is stored together with a source document identification.

2. The method according to claim 1, wherein steps b) and c) are repeated (9) for said source document (32a), before step d) is performed for the source document in its entirety.

3. The method according to claim 1 or 2, wherein step d) of validating (5; 56) said at least one item that has been selected comprises acknowledging the at least one selected item or rejecting the at least one item that has been selected.

4. The method according to claim 3, wherein step b) and step c) are repeated (9) subsequent to step d) and prior to step e).

5. The method according to any of claims 1 - 4, wherein step e) of providing (6; 58) the extract document (42) by performing an irreversible conversion of said source document (32a), based on said source document and said identifying data set for said at least one item that has been validated comprises masking in the extract document said at least one item that has been validated.

6. The method according to any of claims 1 - 5, wherein said irreversible conversion according to step e) comprises conversion of the source document being in an intermediate extract version with the at least one item that has been validated masked off into an image document, possibly followed by a conversion into a portable document format.

7. The method according to any of claims 1 - 6, wherein said source document (32a) is provided as a text document.

8. The method according to any of claims 1 - 7, wherein said at least one item that has been selected from said source document (32a) may be one of
- a word,
- a plurality of words in sequence,
- a paragraph,
- a box and
- combinations of the above.

9. The method according to claim 8, wherein said box may comprise a picture, an image, a drawing, a diagram and/or a word.

10. The method according to any of claims 1 - 9, wherein said step b) of selecting (3; 52) at least one item from said source document (32a) is facilitated by one of
- using a focusing functionality using e.g. OCR recognition,
- marking a plurality of words, a paragraph and/or a document area.

11. A system for providing an extract document from a source document using a method according to any one of claims 1 - 10, said system comprising a computer apparatus, display means (20) and input means (22, 24, 26, 28), said system being configured for
- displaying said source document (32a) on said display means (20),
- facilitating at least one item from said source document to be selected (52) in a manner without amending the source document,
- establishing (54) an identifying data set to identify said at least one item that has been selected,
- facilitating a validation process (5; 56) of said at least one item that has been selected, further **characterized in that** the system is configured for providing (6; 58) the extract document (42) upon a completed validation process (5; 56) by performing an irreversible conversion of said source document (32a), based on said source document and said identifying data set for said at least one item that has been validated,
- wherein said system further is configured for storing (DB2) said identifying data set by means of which said at least one item that has been selected and/or validated is identified, together with a source document identification.

12. The system according to claim 11, wherein said system is configured for facilitating selection (3; 52) of at least one item from said source document (32a) by one of
- using a focusing functionality using e.g. OCR recognition, and
- marking a plurality of words, a paragraph and/or a document area.

13. The system according to any one of claims 11 - 12, wherein said system is configured for performing said irreversible conversion by a conversion of the source document being in an intermediate extract version with the at least one item that has been validated masked off into an image document, possibly followed by a conversion into a portable document format.

14. A computer program product comprising computer readable instructions for carrying out all of the steps of any one of the method claims 1-10, when the computer program product is executed on a suitable computer system.

## Patentansprüche

1. Verfahren zum Bereitstellen eines Auszugsdokuments aus einem Quelldokument, wobei das Quelldokument ein Verschlussdokument ist und wobei das Verfahren die folgenden Schritte umfasst:
a) Bereitstellen (50) des Quelldokuments (32a) in einem computerlesbaren Format,
b) Auswählen (3; 52) wenigstens eines Elements aus dem Quelldokument (32a),
c) Erzeugen (54) eines identifizierenden Datensatzes, um das wenigstens eine Element, das ausgewählt wurde, zu identifizieren,
d) Validieren (5; 56) des wenigstens einen Elements, das ausgewählt wurde,
**dadurch gekennzeichnet, dass** das Verfahren Folgendes umfasst:
e) Bereitstellen (6; 58) des Auszugsdokuments (42) in einem nicht veränderbaren Format, indem eine unumkehrbare Konvertierung des Quelldokuments durchgeführt wird, basierend auf dem Quelldokument (32a) und dem identifizierenden Datensatz für das wenigstens eine Element, das validiert wurde, und
wobei der identifizierende Datensatz, durch den das wenigstens eine Element, das ausgewählt und/oder validiert wurde, identifiziert wird, zusammen mit einer Quelldokument-Identifikation gespeichert wird.

2. Verfahren nach Anspruch 1, wobei die Schritte b) und c) für das Quelldokument (32a) wiederholt werden (9) bevor Schritt d) für das Quelldokument in seiner Gesamtheit ausgeführt wird.

3. Verfahren nach Anspruch 1 oder 2, wobei Schritt d) zum Validieren (5; 56) des wenigstens einen Elements, das ausgewählt wurde, das Bestätigen des wenigstens einen ausgewählten Elements oder das Zurückweisen des wenigstens einen Elements, das ausgewählt wurde, umfasst.

4. Verfahren nach Anspruch 3, wobei Schritt b) und Schritt c) nach Schritt d) und vor Schritt e) wiederholt werden (9).

5. Verfahren nach einem der Ansprüche 1 bis 4, wobei Schritt e) zum Bereitstellen (6; 58) des Auszugsdokuments (42), indem, basierend auf dem Quelldokument und dem identifizierenden Datensatz für das wenigstens eine Element, das validiert wurde, eine unumkehrbare Konvertierung des Quelldokuments (32a) durchgeführt wird, das Verbergen des wenigstens einen Elements, das validiert wurde, im Auszugsdokument umfasst.

6. Verfahren nach einem der Ansprüche 1 bis 5, wobei die unumkehrbare Konvertierung gemäß Schritt e) die Konvertierung des Quelldokuments, das in einer Auszugszwischenversion vorliegt, wobei das wenigstens eine Element, das validiert wurde, verborgen ist, in ein Bilddokument umfasst, möglicherweise gefolgt von einer Konvertierung in ein portables Dokumentenformat.

7. Verfahren nach einem der Ansprüche 1 bis 6, wobei das Quelldokument (32a) als ein Textdokument bereitgestellt wird.

8. Verfahren nach einem der Ansprüche 1 bis 7, wobei das wenigstens eine Element, das aus dem Quelldokument (32a) ausgewählt wurde, eines der folgenden Elemente sein kann:
- ein Wort,
- mehrere aneinanderhängende Worte,
- ein Absatz,
- ein Kasten und
- Kombinationen des Obenstehenden.

9. Verfahren nach Anspruch 8, wobei der Kasten eine Abbildung, ein Bild, eine Zeichnung, ein Diagramm und/oder ein Wort umfassen kann.

10. Verfahren nach einem der Ansprüche 1 bis 9, wobei Schritt b) zum Auswählen (3; 52) wenigstens eines Elements aus dem Quelldokument (32a) durch einen der folgenden Schritte unterstützt wird:
- Verwenden einer Fokussierungsfunktionalität, die beispielsweise OCR-Erkennung verwendet,
- Markieren mehrerer Worte, eines Absatzes und/oder eines Dokumentbereichs.

11. System zum Bereitstellen eines Auszugsdokuments aus einem Quelldokument, das ein Verfahren nach einem der Ansprüche 1 bis 10 verwendet, wobei das System eine Computervorrichtung, ein Anzeigemittel (20) und ein Eingabemittel (22, 24, 26, 28) verwendet und das System für Folgendes eingerichtet ist:
- Anzeigen des Quelldokuments (32a) auf dem Anzeigemittel (20,
- Unterstützen der Auswahl (52) wenigstens eines Elements aus dem Quelldokument in einer Weise, die das Quelldokument nicht verändert,
- Erzeugen (54) eines identifizierenden Datensatzes zum Identifizieren des wenigstens einen Elements, das ausgewählt wurde,
- Unterstützen eines Validierungsvorgangs (5; 56) für das wenigstens eine Element, das ausgewählt wurde,
und außerdem **dadurch gekennzeichnet ist, dass** das System dafür eingerichtet ist, nach einem abgeschlossenen Validierungsvorgang (5; 56) das Auszugsdokument (42) bereitzustellen (6; 58), indem eine unumkehrbare Konvertierung des Quelldokuments (32a) durchgeführt wird, basierend auf dem Quelldokument und dem identifizierenden Datensatz für das wenigstens eine Element, das validiert wurde,
- wobei das System außerdem dafür eingerichtet ist, den identifizierenden Datensatz, durch den das wenigstens eine Element, das ausgewählt und/oder validiert wurde, identifiziert wird, zusammen mit einer Quelldokument-Identifikation zu speichern (DB2).

12. System nach Anspruch 11, wobei das System dafür eingerichtet ist, die Auswahl (3; 52) wenigstens eines Elements aus dem Quelldokument (32a) durch einen der folgenden Punkte zu unterstützen:
- Verwenden einer Fokussierungsfunktionalität, die beispielsweise OCR-Erkennung verwendet,
- Markieren mehrerer Worte, eines Absatzes und/oder eines Dokumentbereichs.

13. System nach einem der Ansprüche 11 bis 12, wobei das System dafür eingerichtet ist, die unumkehrbare Konvertierung durch eine Konvertierung des Quelldokuments, das in einer Auszugszwischenversion vorliegt, wobei das wenigstens eine Element, das validiert wurde, verborgen ist, in ein Bilddokument durchzuführen, möglicherweise gefolgt von einer Konvertierung in ein portables Dokumentenformat.

14. Computerprogrammprodukt, das computerlesbare Anweisungen umfasst, um alle Schritte eines der Verfahrensansprüche 1 bis 10 auszuführen, wenn das Computerprogrammprodukt auf einem geeigneten Computersystem ausgeführt wird.

## Revendications

1. Procédé de fourniture d'un document d'extraction à partir d'un document source, ledit document source étant un document classifié, ledit procédé comprenant les étapes consistant à
a) fournir (50) ledit document source (32a) dans un format lisible par ordinateur,
b) sélectionner (3 ; 52) au moins un article à partir dudit document source (32a),
c) établir (54) un ensemble de données d'identification pour identifier ledit au moins un article qui a été sélectionné,
d) valider (5 ; 56) ledit au moins un article qui a été sélectionné,
**caractérisé en ce que** le procédé comprend
e) la fourniture (6 ; 58) du document d'extraction (42) dans un format fixe en effectuant une conversion irréversible dudit document source, sur la base dudit document source (32a) et dudit ensemble de données d'identification pour ledit au moins un article qui a été validé, et
dans lequel ledit ensemble de données d'identification au moyen duquel ledit au moins un article qui a été sélectionné et/ou validé est identifié, est stocké conjointement avec une identification de document source.

2. Procédé selon la revendication 1, dans lequel les étapes b) et c) sont répétées (9) pour ledit document source (32a), avant que l'étape d) ne soit effectuée pour le document source dans son intégralité.

3. Procédé selon la revendication 1 ou 2, dans lequel l'étape d) de validation (5 ; 56) dudit au moins un article qui a été sélectionné comprend la reconnaissance de l'au moins un article sélectionné ou le rejet de l'au moins un article qui a été sélectionné.

4. Procédé selon la revendication 3, dans lequel l'étape b) et l'étape c) sont répétées (9) après l'étape d) et avant l'étape e).

5. Procédé selon l'une quelconque des revendications 1 à 4, dans lequel l'étape e) de fourniture (6 ; 58) du document d'extraction (42) en effectuant une conversion irréversible dudit document source (32a), sur la base dudit document source et dudit ensemble de données d'identification pour ledit au moins un article qui a été validé comprend le masquage dans le document d'extraction dudit au moins un article qui a été validé.

6. Procédé selon l'une quelconque des revendications 1 à 5, dans lequel ladite conversion irréversible selon l'étape e) comprend la conversion du document source se trouvant dans une version d'extraction intermédiaire avec l'au moins un article qui a été validé, masqué dans un document image, éventuellement suivie d'une conversion en un format de document portable.

7. Procédé selon l'une quelconque des revendications 1 à 6, dans lequel ledit document source (32a) est fourni sous la forme d'un document texte.

8. Procédé selon l'une quelconque des revendications 1 à 7, dans lequel ledit au moins un article qui a été sélectionné à partir dudit document source (32a) peut être l'un parmi
- un mot,
- une pluralité de mots en séquence,
- un paragraphe,
- une boîte et
- des combinaisons de ce qui précède.

9. Procédé selon la revendication 8, dans lequel ladite boîte peut comprendre une photo, une image, un dessin, un schéma et/ou un mot.

10. Procédé selon l'une quelconque des revendications 1 à 9, dans lequel ladite étape b) de sélection (3 ; 52) d'au moins un article à partir dudit document source (32a) est facilitée par l'un de
- l'utilisation d'une fonctionnalité de mise au point utilisant par exemple une reconnaissance ROC,
- le marquage d'une pluralité de mots, d'un paragraphe et/ou d'une zone de document.

11. Système pour fournir un document d'extraction à partir d'un document source en utilisant un procédé selon l'une quelconque des revendications 1 à 10, ledit système comprenant un appareil informatique, des moyens d'affichage (20) et des moyens d'entrée (22, 24, 26, 28), ledit système étant configuré pour
- afficher ledit document source (32a) sur lesdits moyens d'affichage (20),
- faciliter la sélection (52) d'au moins un article à partir dudit document source sans modifier le document source,
- établir (54) un ensemble de données d'identification pour identifier ledit au moins un article qui a été sélectionné,
- faciliter un processus de validation (5 ; 56) dudit au moins un article qui a été sélectionné,
en outre **caractérisé en ce que** le système est configuré pour fournir (6 ; 58) le document d'extraction (42) en cas de processus de validation terminé (5 ; 56) en effectuant une conversion irréversible dudit document source (32a), sur la base dudit document source et dudit ensemble de données d'identification pour ledit au moins un article qui a été validé,
- dans lequel ledit système est en outre configuré pour stocker (DB2) ledit ensemble de données d'identification au moyen duquel ledit au moins un article qui a été sélectionné et/ou validé est identifié, conjointement avec une identification de document source.

12. Système selon la revendication 11, dans lequel ledit système est configuré pour faciliter la sélection (3 ; 52) d'au moins un article à partir dudit document source (32a) par l'un de
- l'utilisation d'une fonctionnalité de mise au point utilisant par exemple une reconnaissance ROC, et
- le marquage d'une pluralité de mots, d'un paragraphe et/ou d'une zone de document.

13. Système selon l'une quelconque des revendications 11 et 12, dans lequel ledit système est configuré pour effectuer ladite conversion irréversible par une conversion du document source se trouvant dans une version d'extraction intermédiaire avec l'au moins un article qui a été validé, masqué dans un document image, éventuellement suivie d'une conversion en un format de document portable.

14. Produit de programme informatique comprenant des instructions lisibles par ordinateur pour réaliser toutes les étapes de l'une quelconque des revendications de procédé 1 à 10, lorsque le produit de programme informatique est exécuté sur un système informatique approprié.
